# EUROPEAN PATENT APPLICATION

(11) **EP 4 270 782 A1**
(43) Date of publication of application: **01.11.2023**
(21) Application number: 22170510.6
(22) Date of filing: 28.04.2022
(51) Int. Cl.: H02S 50/00

(54) **METHOD FOR OPERATING AN OBJECT INCLUDING A PV ARRANGEMENT, PARTICULARLY METHOD FOR OPERATING A VEHICLE INCLUDING A PV ARRANGEMENT PROVIDED ON A VEHICLE BODY**

(71) Applicant: Sono Motors GmbH, 80935 München (DE)
(72) Inventor: BAUDRIT, Mathieu, 80636 Munich (DE); MITSCH, Henrik, 80935 Munich (DE)
(74) Representative: Qip Patentanwälte Dr. Kuehn & Partner mbB

(57) **Abstract**

A method for operating an object (1) including a photovoltaic arrangement (5), particularly method for operating a vehicle (3) including a photovoltaic arrangement (5) provided on a vehicle body (15), is described. The method comprises:
analysing at least one of a temporal evolution and a spatial distribution of electrical characteristics of the photovoltaic arrangement (5), and
upon at least one of the analysed temporal evolution and spatial distribution exhibiting characteristics corresponding to predetermined characteristics of a specified event, issuing a trigger signal for triggering a reaction to the specified event.

Accordingly, the controller (9) and the associated PV arrangement (5) may be used as a sensor for sensing specified events. For example, breakage of a PV cell (7) included in the PV arrangement (5) resulting from a crash of the vehicle (3) with another vehicle may be detected and a time and/or a location of an occurrence of such crash may be registered.

## Description

### FIELD OF THE INVENTION

The present invention relates to a method for operating an object including a photovoltaic arrangement, particularly to a method for operating a vehicle including a photovoltaic arrangement provided on a vehicle body. Furthermore, the application relates to an object, particularly to a vehicle, being configured to operate in accordance with the proposed method, to a computer program product for implementing the proposed method and to a computer readable medium storing such computer program product.

### TECHNICAL BACKGROUND

A photovoltaic arrangement typically comprises a multiplicity of photovoltaic cells. Each photovoltaic cell is configured for converting incident light into electrical energy. The multiple photovoltaic cells are generally electrically interconnected in series and/or in parallel. The photovoltaic cells are generally comprised in one or more photovoltaic panels. The electrical energy generated by the photovoltaic arrangement may be used for supplying power to one or more consumers in an object or electrically connected to the object.

In the following, the term "photovoltaic" may be abbreviated by "PV". PV cells may also be referred to as solar cells.

Furthermore, in the following, exemplary embodiments of the idea proposed herein are mainly described with reference to an object including a PV arrangement, the object being implemented as a vehicle. Such vehicle may be for example a car, a truck, a bus, a mobile home, a train, a ship, and airplane, etc. A vehicle including an integrated PV arrangement may also be referred to as PV integrated vehicle. Particularly, electrically driven vehicles including PV integration may be referred to as solar electric vehicle (SEV). PV integrated vehicles may comprise a multiplicity of solar cells arranged at one or preferably various surfaces along a vehicle body. For example, the present applicant has proposed covering a significant portion of the overall vehicle body with solar cells, thereby providing electric energy to be used in the vehicle itself e.g. for driving the vehicle, to be stored in a vehicle battery and/or to be supplied to external consumers. Therein, the solar cells are integrated into various vehicle body parts. An example of a vehicle body part and of a method for producing such vehicle body part is disclosed in WO 2019/020718 A1. Furthermore, a method for fabricating a curved PV module including adapted positioning of PV cells for integration into a vehicle body part has been described by the present applicant in WO 2021/260024 A1. Details described in the applicant's prior applications may be used in or transferred to embodiments of the invention described herein and the full content of such applications shall be incorporated herein by reference.

It shall be noted that embodiments of the present invention may also be applied to types of objects other than vehicles. For example, an object including a PV arrangement may be a building, a photovoltaic farm, etc.

### SUMMARY OF THE INVENTION AND OF EMBODIMENTS

While PV arrangements are conventionally used for supplying electric energy for consumers in an object, there may be a need for additionally using such PV arrangements for further purposes.

Such need may be met with the subject-matter of the independent claims. Advantageous embodiments are defined in the dependent claims and described in the following specification and visualised in the associated figures.

According to a first aspect of the present invention, a method for operating an object including a photovoltaic arrangement, particularly method for operating a vehicle including a photovoltaic arrangement provided on a vehicle body, is proposed. The method comprises at least the following steps, preferably in the indicated order:
(i) analysing a temporal evolution and/or a spatial distribution of electrical characteristics of the photovoltaic arrangement, and
(ii) upon the analysed temporal evolution and/or the spatial distribution exhibiting characteristics corresponding to predetermined characteristics of a specified event, issuing a trigger signal for triggering a reaction to the specified event.

According to a second aspect of the invention, an object comprising a photovoltaic arrangement and a controller electrically connected to the photovoltaic arrangement. Therein, the controller is configured for implementing or controlling the method according to an embodiment of the first aspect of the invention. According to an embodiment, the object is a vehicle and the PV arrangement is provided on a vehicle body.

According to a third aspect of the invention, a computer program product is proposed. The computer program product includes instructions which, when executed by a processor, instruct the processor to implement or control the method according to an embodiment of the first aspect of the invention.

According to a fourth aspect of the invention, a computer readable medium comprising stored thereon such computer program product is proposed.

Briefly summarised and without limiting the scope of the invention, basic ideas underlying embodiments of the invention and associated possible advantages will be roughly described as follows:
Conventionally, PV arrangements are generally applied for supplying electric energy to consumers. Therein, as soon as the PV arrangement generates any electricity upon solar irradiance, this electricity may be supplied to a consumer. Alternatively, an energy supply from the PV arrangement to the consumer may be triggered for example when the generated electricity exceeds a predetermined limit value.

Additionally to such basic purpose of PV arrangements, it has now been found that further information may be acquired upon operating a PV arrangement and may be used for additional purposes.

Particularly, it has been found that the temporal evolution of the electrical characteristics of a PV arrangement may be influenced by specific events. For example, as described further below in more detail, breakage of a solar cell in a PV arrangement typically influences the electrical characteristics of the PV arrangement in a very specific manner such that such cell breakage may be detected upon analysing the temporal behaviour of the electrical characteristics of the PV arrangement.

Alternatively or additionally, it has been found that the spatial distribution of the electrical characteristics of the PV arrangement may be affected by specific events. For example, the breakage of one solar cell in a PV arrangement comprising multiple solar cells is generally specifically modifying the electrical characteristics of the PV arrangement depending on the location at which the broken solar cell is positioned within the PV arrangement.

By analysing the temporal evolution and/or the spatial distribution of the electrical characteristics of the PV arrangement and comparing those to predetermined characteristics typically observed upon occurrence of specific events, such specific events may be detected. In other words, the PV arrangement may be used as a sensor for sensing specific events by specifically analysing its electrical characteristics with regards to their temporal behaviour and/or spatial behaviour.

Upon having detected a specific event in such manner, a trigger signal is issued for triggering a reaction to the detected specified event. Therein, the trigger signal may be used for example for determining when, i.e. at which point in time, the specified event was detected. Alternatively or additionally, the trigger signal may be used for example for determining where, i.e. at which location, the specified event was detected in relation to a position of the PV arrangement or of the PV cells comprised therein.

In case the object including the PV arrangement is for example a vehicle, such information about the detection of specified events may be beneficially used for various purposes as described in further details below. Such purposes may include for example a detection of a breakage of solar cells in the PV arrangement as a result of a small bump being applied to the vehicle by another vehicle, such solar cell breakage being detectable with regards to the point of time of its occurrence and/or with regards to the location of the broken solar cell at the vehicle body.

In the following, possible features of embodiments of the invention and associated possible advantages will be described in more detail.

Generally, embodiments of the methods proposed herein may be computer-implemented. The step of analysing the temporal evolution and/or the spatial distribution of electrical characteristics of the PV arrangement may be executed in a controller which is electrically connected to the PV arrangement. The controller may be configured for measuring one or plural electrical characteristics of the PV arrangement. Such characteristics may include an electrical voltage, an electrical current, an electrical power, an electrical resistance, an electrical impedance and/or other electrical parameters defining characteristics of the PV arrangement. Particularly, the controller may measure such parameters upon the PV arrangement being irradiated, thereby generating electrical power itself. Alternatively or additionally, the controller may be configured for actively applying an electrical voltage to the PV arrangement and measuring electrical characteristics such as a current, resistance, impedance, etc. resulting at the PV arrangement in reaction to such applied external electrical voltage.

The measured electrical characteristics is then analysed with regards to their temporal evolution and/or spatial distribution.

For example, a temporal behaviour of the electrical characteristics may be analysed by e.g. measuring the electrical characteristics continuously or repeatedly, particularly periodically, and analysing changes of the electrical characteristics occurring over time. For example, from such analysis, information about gradients of electrical characteristics, sudden increases, peaks, drops and/or gaps in the electrical characteristics, etc. may be derived.

According to an embodiment, the temporal evolution of electrical characteristics of the photovoltaic arrangement is analysed with a frequency exceeding 10 Hz, preferably exceeding 20 Hz or even exceeding 50 Hz or 100 Hz. In other words, the electrical characteristics may be measured and analysed periodically at a relatively high frequency such that these characteristics are analysed for example every 100 ms, every 50 ms or in even shorter intervals. Based on such analysis in short intervals, sudden changes in the electrical characteristics may be detected and their temporal evolution may be tracked and subsequently for example compared to a typical evolution of such electrical characteristics resulting from the occurrence of known events.

According to an embodiment, the trigger signal is issued upon detecting a modification in the electrical characteristics of the photovoltaic arrangement by more than 10%, preferably more than 20%, more than 30%, more than 50% or even more than 100%, occurring within a time interval of less than 100 ms, preferably less than 50 ms, less than 20 ms, less than 10 ms or even less than 5 ms. Expressed differently, the temporal evolution of the electrical characteristics may be analysed for detecting an occurrence of a very sudden change in these characteristics. Such sudden change may be characteristic, i.e. may be interpreted as a footprint, for the occurrence of an extraordinary event, i.e. of an event which does not belong to the normal operation of the PV arrangement. The modifications in the electrical characteristics may be interpreted as relative changes, i.e. the changes may be quantified as a percentage relative to a status of the observed parameter before occurrence of the specified event.

For example, a breakage of a solar cell in the PV arrangement typically results in very sudden changes of the electrical characteristics of the PV arrangement, typically in a timescale of milliseconds, in many cases less than 100 ms. In contrast hereto, an irradiance of the PV arrangement and, as a result, a generation of electricity typically changes in longer timescales.

The acquired information about the actually measured evolution of the electrical characteristics may be compared to predetermined characteristics of the evolution of the electrical characteristics as they are typical for specified events. For example, it may be known that a specific type of event typically results in a steep gradient, sudden increase, peak, drop and/or gap of an electrical characteristics or in a combination of such evolution steps. In case the actually measured temporal evolution of the electrical characteristics corresponds to the known predetermined characteristics of such type of event (possibly within acceptable tolerances), this may be taken as indicating the occurrence of the specified event at the monitored PV arrangement.

Alternatively or additionally to analysing the temporal evolution, the spatial behaviour of the electrical characteristics may be analysed. Therein, it may be taken into account that changes and/or events taking place at various locations along the PV arrangement may have different effects onto the electrical characteristics of the PV arrangement. Accordingly, by measuring and analysing the spatial behaviour of the electrical characteristics, such events may be detected and/or classified.

For example, according to an embodiment, the photovoltaic arrangement comprises multiple photovoltaic cells arranged at various locations along a surface of the object. The temporal evolution and/or the spatial distribution of electrical characteristics of the photovoltaic arrangement may then be analysed taking into account information about locations of the photovoltaic cells contributing to the electrical characteristics of the photovoltaic arrangement.

In other words, multiple PV cells may be distributed along a surface of the object carrying the PV arrangement. The locations of these PV cells may be predetermined and may therefore be known upon analysing the electrical characteristics of the PV arrangement. Furthermore, it may be known how each of the PV cells contributes to the overall electrical characteristics of the PV arrangement. Such contribution may depend on the location of the respective PV cell in the PV arrangement. Accordingly, having the knowledge about the respective electrical contribution of each PV cell and furthermore having the actual measurement of the electrical characteristics of the PV arrangement, an information about the location of a PV cell may be taken into account upon analysing the spatial distribution of the electrical characteristics of the PV arrangement. Such information may be used for detecting the location at which one of the PV cells is affected by a specified event resulting in a specified modification of its electrical characteristics.

According to an embodiment, the step of analysing a temporal evolution of electrical characteristics of the photovoltaic arrangement includes detecting a modification of the electrical characteristics resulting from a breakage of at least one of multiple photovoltaic cells included in the photovoltaic arrangement.

Expressed differently, the breakage of a PV cell generically results in the contribution of this PV cell to the overall electrical characteristics of the entire PV arrangement changing in a very specific manner. Particularly, the specific way in which the temporal evolution of the electrical characteristics of the PV arrangement changes is very typical for the specific event of a breaking PV cell. Generally, upon breaking, the contribution of this PV cell to the electrical characteristics changes in a very abrupt manner, i.e. within milliseconds. For example, a PV cell previously generating electricity upon being irradiated, suddenly reduces or even stops such electricity generation upon breakage, such reducing or stopping typically occurring at a much shorter timescale than for example any shadowing of the PV cell. Based on such footprint-type temporal evolution in changes of the electrical characteristics, the specific event of a broken PV cell may be detected.

The information about such event may then be used for issuing a trigger signal triggering a suitable reaction to such event. For example, the broken PV cell may be interpreted as resulting from a minor crash or bump upon which local forces are applied to the PV arrangement resulting in the cell breakage. Upon the object carrying the PV arrangement being a ventricle and the PV cells being distributed along the vehicle body, detecting the event of a broken PV cell may therefore be used for indirectly detecting the crash or bump. Furthermore, having the information about the location of each of the PV cells in the PV arrangement, the location of the PV cell breakage may be determined. Such information may be used for precisely determining the location at which for example another vehicle crashed or bumped into the monitored vehicle and destroyed at least one of its PV cells locally. This information may then be used for example for logging a time at which this event happened, activating a camera for taking images of the circumstances resulting in the crash or bump, sending information about the crash or bump to external locations or persons, etc.

According to a further specified embodiment, the photovoltaic arrangement comprises a bypass diode electrically bypassing at least one bypassed photovoltaic cell included in the photovoltaic arrangement. The step of analysing a temporal evolution of electrical characteristics of the photovoltaic arrangement includes detecting a modification of the electrical characteristics resulting from a breakage of the bypassed photovoltaic cell.

In other words, PV arrangements typically comprise bypass diodes which are electrically connected in parallel to one or more PV cell. Such bypass diodes serve for bypassing an electric current generated by other PV cells in case the bypassed PV cell is for example locally shadowed, damaged or in another way prevented from generating electricity. Upon the bypassed PV cell being suddenly broken, the electrical current flowing throughout the PV arrangement typically changes from a status in which such current is transferred through the intact PV cell and is further enhanced by the electricity generating PV cell to a status which the current is bypassed along the broken PV cell. The specific temporal evolution of such change is very typical for the event of a PV cell breakage and therefore enables detecting such PV cell breakage by analysing the temporal evolution of the electrical characteristics of the PV arrangement.

According to an embodiment, the object includes a camera. The camera and the trigger signal may then be configured for initiating an operation of the camera upon the camera receiving the trigger signal.

Generally, many objects such as vehicles, buildings, etc. carrying PV arrangements are provided with one or more cameras in order to observe for example the object and/or its surrounding. In the approach proposed herein, such camera may be used upon a specified event being detected. Therein, the trigger signal being issued upon detecting the event may be transmitted to the camera and the camera may initiate its operation upon receiving such trigger signal. Accordingly, the camera does not need to be operated continuously, but its operation may be started specifically after having detected the specified event.

For example, the camera may be activated upon a PV cell breakage being detected and it may be assumed that such PV cell breakage results from the monitored object being hit by another object or, in the more specific example of the object being a vehicle, the vehicle being crashed or bumped by another vehicle. The camera may then acquire images from an environment, wherein such images may e.g. possibly visualise a crash counterpart.

According to an embodiment, upon issuing the trigger signal, a time stamp is logged. Such time stamp may indicate the point in time at which the specified event has been detected. The time stamp may be stored in a memory and/or may be transmitted to a target location or target device. Accordingly, the time stamp may later be used for determining the moment at which the specified event took place and/or for reconstructing circumstances during the event.

According to an embodiment, the trigger signal is communicated to a remote device arranged externally to the object. In other words, the trigger signal may not only be used within the object itself but may also be transmitted to remote locations and may be used there for example for initiating reactions to the detected event. For example, the trigger signal may be communicated to a portable device such as a smart phone, notepad, etc. of a person such as an owner of the monitored object in order to inform such person about the occurrence of a specified event. Additionally or alternatively, the trigger signal may be communicated to a remote monitoring center which is monitoring the object from a distant place and at which suitable reactions may be initiated upon being informed about the occurrence of a specified event.

The controller comprised in the object including the PV arrangement to be monitored may be implemented in hardware and/or software. Particularly, the controller may be programmable. For such purpose, the controller typically comprises a processor for processing instructions, a memory for storing the instructions and/or data, and/or one or more interfaces for communicating instructions and/or data.

The computer program product usable for programming the controller may be formulated in any suitable computer language.

The computer program product may be stored on a computer readable medium. The computer readable medium may be a portable medium such as a CD, a DVD, a flash memory, a ROM, a PROM, an EPROM or similar storage devices. Alternatively, the computer readable medium may be a stationary device such as another computer or server, such computer or server possibly being part of a data cloud, wherein the computer program may be downloaded from such computer or server via a network such as the Internet.

It shall be noted that possible features and advantages of embodiments of the invention are described herein partly with respect to a method for operating an object such as a vehicle including a PV arrangement and partly with respect to the object itself. One skilled in the art will recognize that the features may be suitably transferred from one embodiment to another and features may be modified, adapted, combined and/or replaced, etc. in order to come to further embodiments of the invention.

### BRIEF DESCRIPTION OF THE DRAWINGS

In the following, advantageous embodiments of the invention will be described with reference to the enclosed drawing. However, neither the drawing nor the description shall be interpreted as limiting the invention.

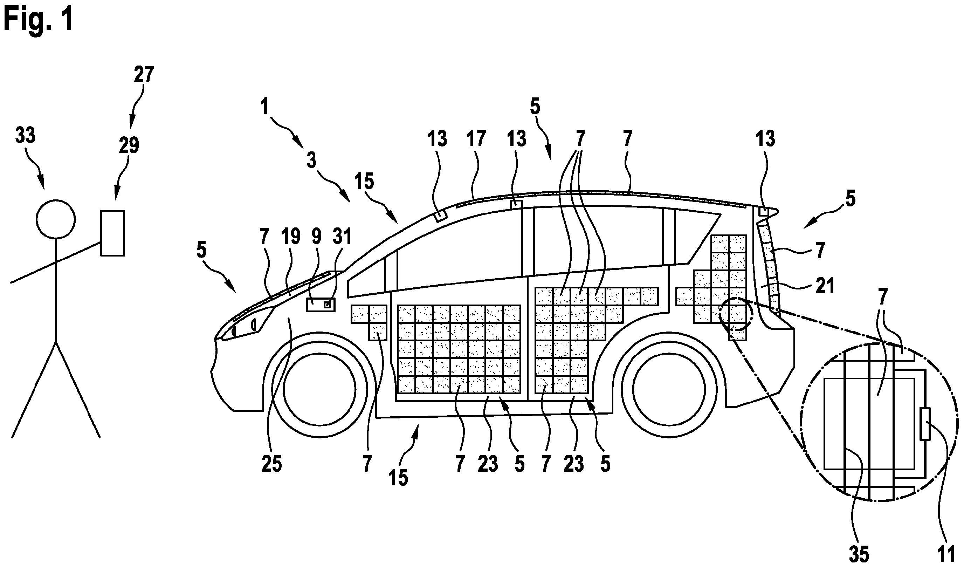

Fig. 1 shows a side view of a vehicle with a PV arrangement which is operated in accordance with an embodiment of the present invention.

The figure is only schematic and not to scale. Same reference signs refer to same or similar features.

### DESCRIPTION OF PREFERRED EMBODIMENTS

Fig. 1 shows an object 1 including a PV arrangement 5. In the given example, the object 1 is a vehicle 3. Therein, the PV arrangement 5 is provided on a vehicle body 15. Specifically, various portions of the PV arrangement 5 are arranged along different surfaces of the vehicle body 15 and are incorporated in different vehicle body parts such as a roof 17, a hood 19, a hatch door 21, multiple side doors 23 and/or mud guards 25. Each portion of the PV arrangement 5 comprises several PV cells 7. Preferably, the PV cells 7 are high efficiency solar cells such as wafer-based silicon solar cells typically having an efficiency of between 16% and 24%. As visualised in the enlarged section in the figure, neighbouring PV cells 7 are electrically connected to each other via interconnectors 35 in order to form a string of a series connection. To each single PV cell 7 or to a multiplicity of interconnected PV cells 7, a bypass diode 11 may be associated in a parallel electrical circuitry.

During normal operation, i.e. as a main purpose, the PV arrangement 5 produces electrical energy upon being irradiated with solar irradiation. The electrical energy may be e.g. stored in a battery, may be used for driving the vehicle and/or may be supplied to further internal or external consumers.

An operation of the PV arrangement 5 may be controlled using a controller 9. The controller includes a processor 31. Such controller 9 may be implemented as or may be included in an MCU (microcontroller unit) or an MPPT (maximum power point tracker). Such devices may control an energy generation in the PV arrangement 5 and/or an energy supply or distribution to one or multiple consumers.

According to an embodiment of the present invention, the vehicle 3 comprising the PV arrangement 5 may be specifically operated by using the PV arrangement 5 for additional purposes. Therein, generally spoken, the PV arrangement 5 may be used as a kind of sensor for sensing one or a plurality of various events.

In such operation mode, a temporal evolution and/or a spatial distribution of electrical characteristics of the PV arrangement 5 are measured and analysed.

Preferably, the temporal evolution of the electrical characteristics of the PV arrangement 5 is determined by measuring such electrical characteristics at a frequency of at least 10 Hz. Particularly, measured electrical characteristics of the PV arrangement 5 are evaluated with regards to their temporal and/or spatial behaviour, e.g. by comparing the measurements with predetermined characteristics of one or more specified events. For example, such predetermined characteristics may have been acquired in tests or experiments. Alternatively, such predetermined characteristics may have been derived using for example computer simulations, modelling and/or calculations. Particularly, it may be observed whether or not the monitored electrical characteristics exhibit a very sudden modification, for example a change of more than 10% within less than 0.1s, as it may be characteristic for some specific events.

Additionally or alternatively, the spatial distribution of the electrical characteristics of the PV arrangement 5 may be analysed and it may be detected whether measured characteristics correspond to predetermined characteristics of a specified event. Therein, it may be for example taken into account that multiple PV cells 7 of the PV arrangement 5 are arranged at various locations along the surface of the vehicle body 15. Such information about the location of each of or a group of PV cells 7 may then be taken into account upon observing a specific behaviour of the electrical characteristics of the PV arrangement 5.

In case such monitoring results in detecting that the analysed temporal evolution and/or spatial distribution sufficiently coincides with the predetermined characteristics of a specified event, a trigger signal is issued in order to thereby triggering a reaction to the specified event.

Subsequently, specific exemplary implementations of the operation method described herein shall be explained in more detail.

In a first example, monitoring the electrical characteristics of the PV arrangement 5 may be used for detecting for example a small impact onto the vehicle 3 or crash with another vehicle. Such impact or crash may result in a temporal or remaining deformation of the affected vehicle body part. Typically, upon such deformation, the fragile or brittle PV cells 7 incorporated or attached to the body part at the deformed location may be damaged or even broken. Upon such breakage of one or more PV cells 7, electrical characteristics of the affected portion of the PV arrangement 5 shows sudden modifications which are characteristic for such PV cell breakage. Particularly, while the PV cell 7 previously may have produced electricity, it suddenly reduces or even stops such electricity generation upon being broken. Furthermore, upon the PV cell 7 being bypassed by a bypass diode 11, the flow of electric current throughout the PV arrangement 5 generally suddenly changes from flowing through the PV cell 7 to flowing through the bypass diode 11 and, as the PV cell 7 and the bypass diode 11 generally have different electrical characteristics, such sudden change of the current flow path generally results in a detectable change in the electrical characteristics of the PV arrangement 5.

Accordingly, by monitoring the temporal evolution of the electrical characteristics of the PV arrangement 5, the controller 9 may use the PV arrangement 5 as a sensor for sensing impacts onto the vehicle body 15, especially when such impacts are strong enough to damage one of the PV cells 7. Furthermore, taking into account an available information about a location of a PV cell 7 being affected by such impact, the controller 9 and the associated PV arrangement 5 may even be used as a distributed sensor which may sense not only the occurrence of an impact but also the location at which such impact acted onto the vehicle body 15.

The information about such specified event may be registered and/or send as an alert. For example, a time stamp indicating when the specified event was detected may be logged, i.e. for example stored in a memory connected to the controller 9. Thus, the information about the point in time at which for example the vehicle was damaged may be retrieved at a later point in time. Thereby, for example circumstances of a crash may be reconstructed, evaluated and/or verified.

As a specific example, in case the vehicle 3 is a car-sharing vehicle, it may be determined which person had actually rented and was therefore responsible for the vehicle 3 at the moment when it was damaged.

Additionally or alternatively, the information about the specified event may for example be transmitted to a remote device 27. For example, such remote device 27 may be a smart phone 29 of a person 33. Accordingly, while being remote to the vehicle 3, the person 33 may be informed about the occurrence of a damage to the vehicle 3.

As other examples, monitoring the temporal evolution and/or spatial distribution of electrical characteristics of the PV arrangement 5 may be used for detecting various other specified events and/or reacting to such events by triggering suitable actions as follows:
- An issued trigger signal may actuate one or more cameras 13 provided in the vehicle 3. Such cameras 13 may acquire images or video sequences in the vehicle 3 and/or in a surrounding of the vehicle 3. Thereby, information about visible conditions during a specified event may be acquired using the camera 13. Specifically, the camera 13 does not have to be operated continuously which could provoke legal conflicts and/or consume excessive energy. Instead, the camera 13 is only activated as soon as a predefined specified event is detected.
- The PV arrangement 5 could be operated as a light sensor as the PV cells 7 could detect an increased amount, decreased amount or typically varying amount of light irradiated onto the vehicle 3 or onto portions of the vehicle 3. For example, it could be detected when an increased intensity of light is irradiated onto one side of a car. In reaction, a driver of the car could be informed. Alternatively or additionally, some automatised reactions could be triggered. For example a curtain may be activated in order to protect passengers such as children on a rear seat of the vehicle 3 against excessive solar irradiation.
- As a suitable reaction to a specified event, the issued trigger signal could trigger providing information to an external device 27 such as a smartphone 29. Particularly, the information could be pushed to an application (app) on the smartphone 29. All the information could be pushed to a digital vehicle backend in (near-) real-time such that digital customer interactions may be triggered (e.g. mobile app push notification, web browser notification). Use cases for such implementation may be for example that a user is alerted when a police officer is about to write a parking ticket on his vehicle or a user is alerted when somebody parks his car to close to his vehicle. As another option, dynamic car sharing prices may be adapted taking into account a specific drop-off location of the vehicle in order to maximise solar energy harvesting.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### LIST OF REFERENCE SIGNS

- 1: object
- 3: vehicle
- 5: PV arrangement
- 7: PV cells
- 9: controller
- 11: bypass diode
- 13: camera
- 15: vehicle body
- 17: roof
- 19: hood
- 21: hatch door
- 23: side door
- 25: mud guard
- 27: remote device
- 29: smartphone
- 31: processor
- 33: person
- 35: interconnector

## Claims

1. Method for operating an object (1) including a photovoltaic arrangement (5), particularly method for operating a vehicle (3) including a photovoltaic arrangement (5) provided on a vehicle body (15), the method comprising:
analysing at least one of a temporal evolution and a spatial distribution of electrical characteristics of the photovoltaic arrangement (5), and
upon at least one of the analysed temporal evolution and spatial distribution exhibiting characteristics corresponding to predetermined characteristics of a specified event, issuing a trigger signal for triggering a reaction to the specified event.

2. Method according to claim 1,
wherein the temporal evolution of electrical characteristics of the photovoltaic arrangement (5) is analysed with a frequency exceeding 10 Hz.

3. Method according to one of the preceding claims,
wherein the trigger signal is issued upon detecting a modification in the electrical characteristics of the photovoltaic arrangement (5) by more than 10% occurring within a time interval of less than 100 ms.

4. Method according to one of the preceding claims,
wherein the photovoltaic arrangement (5) comprises multiple photovoltaic cells (7) arranged at various locations along a surface of the object (1), and
wherein the at least one of the temporal evolution and the spatial distribution of electrical characteristics of the photovoltaic arrangement (5) is analysed taking into account information about locations of the photovoltaic cells (7) contributing to the electrical characteristics of the photovoltaic arrangement (5).

5. Method according to one of the preceding claims,
wherein the step of analysing a temporal evolution of electrical characteristics of the photovoltaic arrangement (5) includes detecting a modification of the electrical characteristics resulting from a breakage of at least one of multiple photovoltaic cells (7) included in the photovoltaic arrangement (5).

6. Method according to one of the preceding claims,
wherein the photovoltaic arrangement (5) comprises a bypass diode (11) electrically bypassing at least one bypassed photovoltaic cell (7) included in the photovoltaic arrangement (5),
wherein the step of analysing a temporal evolution of electrical characteristics of the photovoltaic arrangement (5) includes detecting a modification of the electrical characteristics resulting from a breakage of the bypassed photovoltaic cell (7).

7. Method according to one of the preceding claims,
wherein the object includes a camera (13), and
wherein the camera (13) and the trigger signal are configured for initiating an operation of the camera (13) upon the camera (13) is receiving the trigger signal.

8. Method according to one of the preceding claims,
wherein, upon issuing the trigger signal, a time stamp is logged.

9. Method according to one of the preceding claims,
wherein the trigger signal is communicated to a remote device (27) arranged externally to the object (1).

10. Object (1) comprising:
a photovoltaic arrangement (5),
a controller (9) electrically connected to the photovoltaic arrangement (5),
wherein the controller (9) is configured for one of implementing and controlling the method according to one of the preceding claims.

11. Object of claim 10,
wherein the object (1) is a vehicle (3) and wherein the photovoltaic arrangement (5) is provided on a vehicle body (15).

12. Computer program product including instructions which, when executed by a processor (31), instruct the processor (31) to one of implementing and controlling the method according to one of claims 1 to 9.

13. Computer readable medium comprising stored thereon the computer program product according to claim 12.
